# EUROPEAN PATENT SPECIFICATION

(11) **EP 0 369 730 B1**
(45) Date of publication and mention of the grant of the patent: **20.04.1994**
(21) Application number: 89311756.4
(22) Date of filing: 14.11.1989
(51) Int. Cl.: G09F 9/35, G02F 1/133

(54) **Color liquid crystal display**
Farbige Flüssigkristallanzeigevorrichtung
Système d'affichage à cristaux liquides en couleur

(30) Priority: 14.11.1988 US 270074
(43) Date of publication of application: 23.05.1990
(73) Proprietor: LITTON SYSTEMS CANADA LIMITED, Etobicoke Ontario M9W 5A7 (CA)
(72) Inventor: Prince, John Colin, Ontario, LOG 1JO (CA); Farrell, James Francis, Pickering, Ontario L1V 3W6 (CA)
(74) Representative: Godsill, John Kenneth

(56) References cited:
- EP-A- 0 267 686
- PATENT ABSTRACTS OF JAPAN, vol. 10, no. 343 (E-456)[2399], 19th November 1986;& JP-A-61 145 984 (MATSUSHITA)

## Description

The present invention relates to full color displays, and in particular, to the type that is illuminated by both ambient and artificial light and having the features of the preamble of claim 1. A display of this type is disclosed in EP-A-0 267 686.

At present, full color displays for use in aircraft and military vehicles commonly utilize a cathode ray tube (CRT). While such displays provide adequate resolution and brightness, they are relatively bulky, consume much power in operation and often require cooling systems that further contribute to the bulk and the power consumption of the total system. These factors are often of critical importance to the design of airborne systems.

The drawbacks of full color CRT displays have led to investigation of the feasibility of full color displays based, inter alia, upon the use of a layer of electrooptic liquid crystal material. Liquid crystal technology offers the possibility of flat, relatively thin and therefore highly compact construction. Further, the voltages and power levels required to actuate liquid crystal materials to a preferred orientation for modulating incident light are relatively low.

The principal classifications of liquid crystal material are twisted nematic, guest-host (or Heilmeier), phase change guest-host and double layer guest-host. The particular liquid crystal material employed dictates the type of optical modulation that is effected by the light valve. For example, twisted nematic material causes the polarization of the light passing therethrough to become reoriented (usually by ninety degrees). Guest-host materials, so-called by the presence of a dye that aligns itself with the liquid crystal molecules, modulate light as a consequence of the property of the dye to absorb or transmit light in response to the orientation of the liquid crystal molecules. In phase change guest-host materials, the molecules of the liquid crystal material are arranged into a spiral form that blocks the majority of the light in the "off" state. The application of a voltage aligns the molecules and permits passage of light. Double layer guest host liquid crystal compromises two guest-host liquid crystal cells arranged back-to-back with a ninety degree molecular alignment orientation there-between.

Liquid crystal displays may be arranged to operate in a transmissive mode, a reflective mode, or both. Generally, the reflective mode is most suitable for operation under high ambient light conditions while the transmissive mode, which requires backlighting, is most usefully employed in applications involving both dark and low ambient (e.g. office) lighting conditions. The combination of both modes of operation is known as the "transflective" mode. This mode is particularly-appropriate for broad range operation that includes many important applications such as, for example, the cockpit environment.

Presently, liquid crystal displays for operation in the transflective mode include a liquid crystal light valve in combination with a source of artificial visible backlighting. A light diffusion plane is located intermediate the light source(s) and the light valve. The optical properties of the plane generally represent a compromise between the needs to (1) transmit artificial backlight and (2) reflect ambient light, when available, through the liquid crystal light valve. The state of the liquid crystal material is spatially controlled by a transparent electrode matrix. (When an active device such as a thin film transistor or "TFT" is incorporated into the array to enhance the addressability of the matrix, it is known as an active matrix display). Pixel locations are addressed and the molecules of the adjacent liquid crystal material are modulated so that a spatial distribution of pixel areas of preselected, varied light transmissions is attained. In a full color display, a full color filter that comprises a matrix or mosaic of individual (narrowband) primary color filters provides the sole means for selecting the desired color band of the white light (transmitted backlighting and reflected ambient light) that passes through the liquid crystal material layer. Light absorbing dyes form the (red, green and blue) color elements of the matrix. The color elements of the filter are in registration with the elements of the electrode matrix so that, by addressing the electrodes in accordance with the color coding of the filter matrix, the transmission of white light through the liquid crystal material produces a full color display. A representative display of this type is disclosed in United States patent Serial No. 3,840,695 of Fischer for "Liquid Crystal Image Display Panel With Integrated Addressing Circuitry."

Displays in accordance with the above-described typical arrangement are beset with many difficulties. The use of absorbing dye filters to color the image passing through the liquid crystal layer represents a highly inefficient usage of the energy of the light source. Each dedicated filter element essentially blocks transmission of two thirds of the white light through the valve. That is, in the prior art each pixel is illuminated with white light, requiring the color filters transmit only the desired portion of the white light spectrum while absorbing all other wavelengths. In total, about one third of the energy of the white light source is transmitted through each filter "window."

The energy absorption effect is even more dramatic in regard to utilization of (reflected) ambient light by the display. Reflected light must pass through the filter twice, multiplying the energy loss. As a result, the display is often unsuitably dim. Correction for such dimness often involves an increase in the power level of the backlighting that, in turn, introduces additional undesirable effects. In addition to conflicting with the goal of a low energy display, this may produce harmful temperature rises within the system.

The design of a single filter for coloring both backlight and ambient illumination is further complicated by the different chromaticity effects experienced by the reflected light that passes twice through the filter and the transmitted light that passes through only once. Such disparity can result in a display of differing hues during high and low ambient lighting conditions.

Another deficiency of the conventional approach is that, in the desire to minimize undesirable parallax effects, the color filter elements must be closely located immediately adjacent the liquid crystal layer. Thus, the diffusion (or back) plane, which must be behind the liquid crystal layer, is recessed by the thickness of the glass layer at the rear of the liquid crystal. The resultant spacing of the filter and the somewhat-reflective backplane can produce two deleterious effects during reflective mode operation. Ambient light will generally include off-axis rays. When ambient light is absorbed in the liquid crystal layer, it creates a shadow on the diffusing plane along the axis of the incident light. Therefore, as the display is viewed at an angle with respect the direction of such incident light, the image appears to be displaced with respect to the image created in the liquid crystal layer. This results in an annoying double image or "shadowing " effect. Of perhaps even greater significance, the spacing of the backplane from the color matrix can produce cross-contamination between the primary colors of the filter. This results when an oblique, off-axis ray of ambient light passes through a filter of one primary color when incident upon the front of the light valve and then exits the valve through a filter of a second primary color after reflection from the backplane.

According to the invention there is provided a display comprising in combination a light modulating member, means for applying a plurality of spatially distributed field values to said member whereby a pattern of light transmissive areas is generated within said light modulating member, a phosphor layer which can be excited to emit visible light, a fibre optic component intermediate said phosphor layer and light modulating member, said component comprising a bundle of optical fibres and said phosphor layer being arranged so that the intensity of light emitted therefrom will be modulated by the pattern of light transmissive areas of said light modulating member, characterised in that said means for applying a plurality of spatially distributed field values is arranged adjacent to and at that side of said light modulating member which is more remote from the fibre optic component.

In one embodiment of the invention the light-conducting plate has front and rear faces and a plurality of adjacent and parallel optical-fiber light pipes extending between the faces. Each of the pipes comprises a bundle of optical fibers. A filter layer is formed directly on the rear face of the plate. A matrix of distinct phosphor elements is deposited directly upon the filter layer, each of such elements being in registration with a rear end of one of the light pipes and capable of emitting visible light when illuminated by fluorescent light. A layer of liquid crystal material is provided. An array of distinct transparent control electrodes is located adjacent and in front of the layer of liquid crystal material. Each of such electrodes is in aligned registration with one of the phosphor elements through a front end of one of the pipes. A source of fluorescent light is provided behind the plate for illuminating each phosphor element with fluorescent light. The layer of liquid crystal material is adjacent to the array of electrodes. The layer and the electrodes have associated means for defining an array of light-conducting cells in registration with the pipes and for modulating the amount of light passing through corresponding ones of the cells and the pipes.

In more detail, the first embodiment of the invention includes a layer of liquid crystal material 25. A planar array of transparent control electrodes is associated with the layer of liquid crystal material for forming a planar array of adjacent modulated light-conducting cells. A planar matrix of discrete phosphor elements is provided. Each of such elements is in light-conducting communication with a rear end of a light pipe of a fiber optic plate that is disposed behind the layer of liquid crystal material and in front of the planar matrix of discrete phosphor elements. The plate includes a plurality of adjacent and parallel light-conducting pipes, each of which comprises a plurality of optical fibers wherein the phosphor elements are distributed into adjacent groups thereof and wherein the emission spectra of the elements of each group differ from each other so that the color of light emitted from each group can be adjusted through the full spectrum of visible light. An ultraviolet light source is located behind the planar matrix of discrete phosphor elements for irradiating the elements with ultraviolet light. A first filter means is positioned behind the planar matrix of discrete phosphor elements and in front of the ultraviolet light source for transmitting ultraviolet light to the phosphor layer and for reflecting visible incident ambient light. A second filter means is located in front of the planar matrix and behind the plate for transmitting visible ambient light to the matrix and for reflecting incident ultraviolet light. The planar array of transparent electrodes is located adjacent and in front of the layer of liquid crystal material.

For a better understanding of the present invention and as to how the same may be carried into effect, reference will now be made by way of example to the accompanying drawings in which:
Figure 1 is an exploded perspective view of the arrangement of a light valve for use in a full color display embodying the present invention; and
Figure 2 is a schematic side view of a full color liquid crystal display in accordance with this invention that serves to illustrate its operation.

### DESCRIPTION

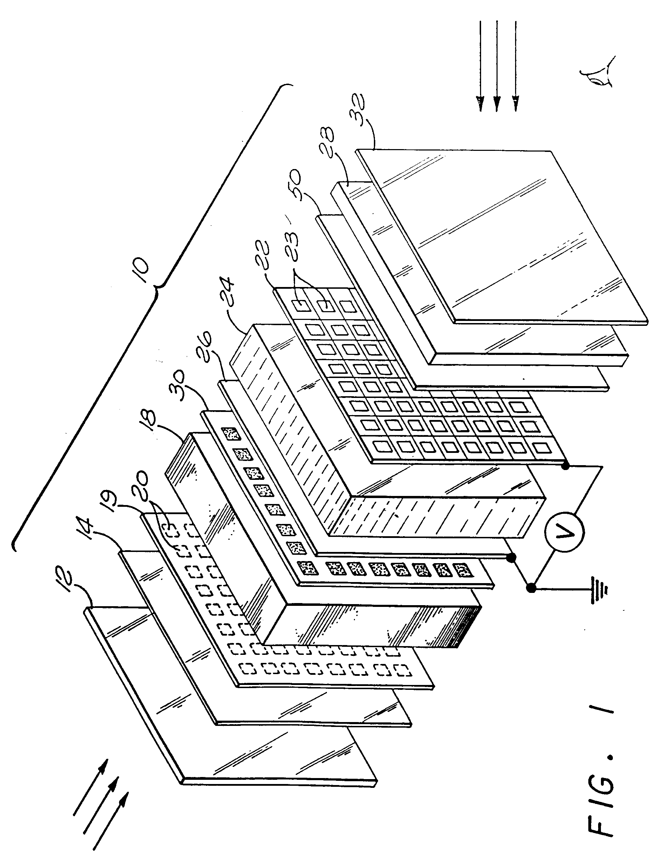

Turning now to the drawings, Figure 1 is an exploded perspective view of an improved light valve 10. Some of the details of construction of the light valve 10 have been omitted for purposes of clarity from the representation of Figure 1. However, it will be appreciated by those skilled in the art that such omitted details relate to matters that are well known in the art.

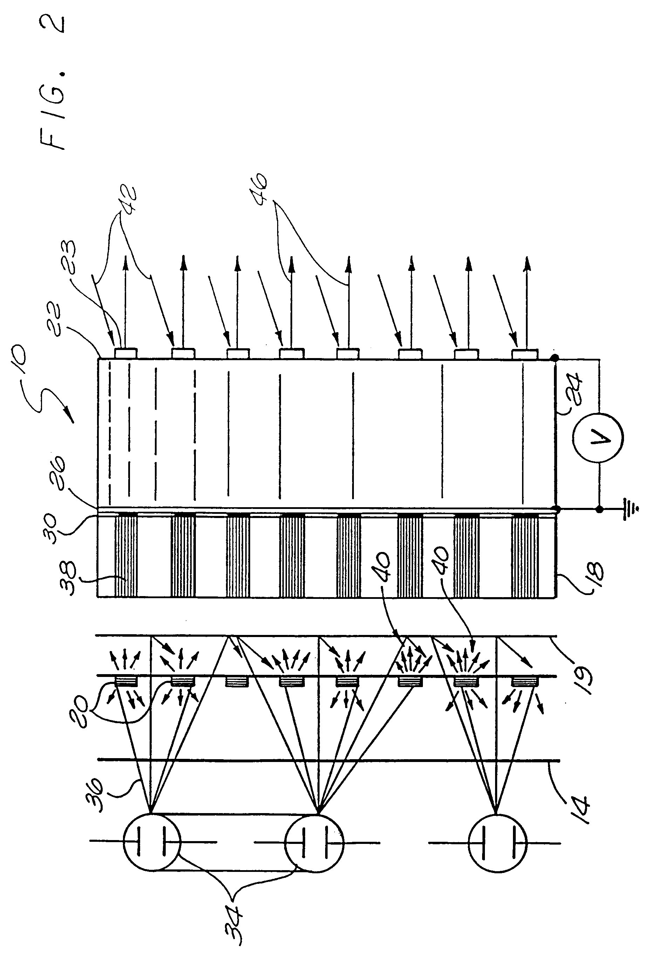

The description of the structure of the light valve of Figure 1 will proceed from its rear or backside which accepts the output from one or more sources of ultraviolet radiation to the front surface through which ambient illumination enters the cell. A plate 12 forms the rear surface of the light valve 10. The plate 12, preferably quartz, transmits ultraviolet radiation. A first dichroic selective filter layer 14 is deposited on the inner surface of the plate 12. The dichroic filter 14 is fabricated of material that is transmissive to ultraviolet radiation and reflects visible light. (The significance of such arrangement will become further apparent from the discussion accompanying Figure 2).

A fiber optic plate 18 of about .05 inch(.125cm) thickness is located adjacent the filter layer 14 of the plate 12. A second dichroic filter 19 is located at the rear or backside of the plate 18. The filter 19 (shown and discussed further in conjunction with Figure 2), differs from the first dichroic filter 14 in that it is fabricated of material that reflects ultraviolet and transmits visible radiation. A phosphor layer 20 is deposited onto the surface of the filter 19. The layer 20 may comprise a matrix arrangement of a plurality of discrete phosphor elements. (The terms "phosphor," as used herein, includes any material that converts energy from an external excitation and, by means of the phenomenon of phosphoresecnce or fluorescence, converts such energy into visible light).

In such a matrix, each phosphor element is aligned in registration with a corresponding element or thin film transistor ("TFT") 23 of an electrode matrix 22. The phosphor matrix may contain a single type (i.e. wavelength emission spectrum) of phosphor or a plurality of phosphor types for providing a multi-color display. In the case of a full color display, a plurality of phosphors, each of which emits one of the primary colors upon excitation by ultraviolet radiation, is preferably arranged into a recognized format. This may include, for example, the conventional triad, quad (in which the green component is doubled) or fixed format geometries. The phosphors may be deposited by any of a number of well known processes including settling, screen printing and photolithography. These processes are also commonly employed in the fabrication of CRT screens.

As an additional feature, each of the plurality of phosphors 20 may be colored (body color) such that the chromaticity of the reflectance spectrum closely matches that of the phosphor's emission spectrum. The purpose of such pigmentation is to prevent the "washing out" or other introduction of color impurity into the image emitted by the excited phosphors. This can occur in the presence of high ambient illumination by the superposition of the color reflected from the surfaces of the phosphors.

The active electrode matrix 22, comprising metallized buses and transparent TFT's 23 is formed on an absorptive bus mask 50 that is, in turn, fixed to the inner surface of the front plate 28. The bus mask 50 comprises a black layer fabricated of a mixture of metal oxides including chromium and, possibly, manganese or magnesium oxide. It is applied to the glass front plate 28 prior to formation of the electrode matrix 22. The mask 50 acts to "hide" the otherwise-very-reflective metallic buses of the matrix.

The arrangement and fabrication of such an electrode matrix for spatially distributing a plurality of liquid crystal level voltages is well known in the art and is disclosed, for example, in the Fischer patent referenced above. Generally, such a structure may be formed by vacuum deposition of metallized electrodes (dielectric inter-layers are provided for necessary insulation). The electrode matrix 22 is preferably an "active" matrix that associates a semiconductor device (transistor or diode) with each node of the bus structure. Such active electrode arrays facilitate the addressing of large element arrays.

The present device realizes a significant enhancement in terms of manufacturing over that disclosed in EP-A-0 267 686 through rearrangement of a number of layers, including the TFT matrix 22. In the other device, the matrix 22 is formed upon a surface of the fiber optic plate 18, the plate 18 thereby acting as the common substrate of the semiconductor devices. The semiconductor TFT matrix layer 22 is thereby subject to the direct transmission of stresses from the underlying fiber optic plate substrate. Unfortunately, a fiber optic plate, which is essentially a fused mosaic of many hundreds of thousands of individual optic fibers, each having its own core and cladding, presents very complex thermal expansion and stress problems. The glasses employed in a fiber optic plate are chosen on the basis of their indices of refraction and ease of fusion rather than for homogeneity of thermal expansion and their reactions to common TFT fabrication processes such as acid etching and reactive ion etching. The front plate 28, on the other hand, comprises a homogeneous sheet of glass chosen for its low alkaline ion content and overall stability. Thus, a device in accordance with the present invention allows formation of the TFT matrix 22 by conventional semiconductor fabrication processes and permits the accurate modeling of stress effects throughout the layer of semiconductor material to improve ease of manufacture and reliability, producing both long and short term economics.

The phosphor and active electrode matrices are aligned by well known techniques.

A liquid crystal layer 24 is positioned adjacent the counterelectrode layer 26. This layer, which compromises a layer of liquid crystal material (about .25 mil (6,4 µm) thick) sandwiched between two transparent plates (each about .43 mil (11,1 µm) thick), is preferably formed of guest-host (Heilmeier) liquid crystal material as this material is known to have a good gray-level characteristic (i.e. linearity of the voltage-light transmission relationship). However, phase change guest-host material is equally compatible with displays embodying the invention. The general arrangement of the display is further compatible with the additional structural layers required to accommodate double layer guest host liquid crystal material.

A layer 26 of transparent conductive material such as ITO (indium tin oxide) is located at the rear surface of the liquid crystal 24 and is generally maintained at a reference potential with respect to the address and data voltages applied to the active electrode matrix 22. The layer 26 acts as an equipotential surface that proves the common or counterelectrode of the display. Further, the counterelectrode 26 provides a planarizing layer for an optional color filter 30 (discussed below).

The layer 26 coats the back surface of the bus mask 50. The front plate 28 admits ambient light into the light valve 10 from the environment and transmits the visible light emitted by the phosphors 20 and reflected from surfaces of the phosphors and the first filter 14 and then transmitted through the liquid crystal layer 24. The plate 28 is preferably fabricated of glass having a coefficient of thermal expansion which closely matches that of the fiber optic plate 18. Such matching of coefficients minimizes stressing of the required hermetic seal (not illustrated) between the front plate 28 and the fiber optic plate 18. Such a hermetic seal prevents both leakage and contamination of the liquid crystal material 24.

A color filter 30 may be optionally deposited onto the front of the fiber optic plate 18. The filter 30, comprising a matrix of light absorbing dyes (each in registration with a like-colored phosphor of the matrix 20), provides an alternative to body coloring the phosphors to prevent the image washout at high ambient illumination that could otherwise occur. The individual filter elements differ in height according to coloration. As mentioned earlier, the counterelectrode layer 26 planarizes the filter 30 to enhance the life and reliability of the composite device. While the arrangement of dye elements of the filter 30 and its principle of operation are the same as that of a color filter of the type that is commonly employed on prior art liquid crystal displays, the filter 30 is qualitatively different in both structure and operation in that its individual filter elements are not as wavelength selective as those of the filters of prior art full color displays. This is a result of the fact that, in the liquid crystal display system of the invention, the filter 30 is not the sole available means for coloring the output image. Rather, as will be seen from the discussion that accompanies Figure 2, the primary sources of colored light for the display are the visible colored light emissions of the excited phosphors 20.

The visible emissions of colored light from the phosphors generally have a narrow bandwidth and exhibit well saturated chromaticity that is similar in performance to the outputs from the cathode luminescent phosphors used in color CRT's. The outputs from the phosphors are necessarily superimposed upon the color filter elements that are illuminated by reflected ambient light. Thus, the filter 30 needn't have the same selectivity as the light absorbing filters of prior art liquid crystal displays that rely solely upon a dye filter to color the output image. As a result, the design of the filter 30, as opposed to filters for prior art liquid crystal displays, is of a lesser wavelength selectivity, features a much wider passband, and may be employed with a correspondingly reduced effect in terns of its absorption of the energy input (both natural and artificial) to the display. A much higher percentage of white light is transmitted through the absorbing filter 30 of the display of the invention than is transmitted through the type of filter that is commonly employed in prior art liquid crystal displays. The effect of the increased transmissivity of the filter 30 becomes even more pronounced in the reflective mode as reflected ambient light passes through the filter 30 twice (upon both incidence and reflection).

The final element of the light valve 10 is an optional polarizer 32. This polarizer is required for operation of the display when a guest-host (Heilmeier) type material is employed for the liquid crystal layer 24 but would be unnecessary in a display that utilizes a phase change guest-host material. This reflects the differing mode of physical operation of these two types of liquid crystal materials.

Figure 2 is a partial side view of a liquid crystal display arrangement embodying the invention. Certain elements of the light valve 10 of Figure 1 have been omitted and others are shown somewhat schematically in this figure to assist in the accompanying discussion.

A fluorescent lamp 34 is positioned at the backplane of the light valve 10. The electrodes of the lamp 34 are enclosed within a clear envelope of quartz or other ultraviolet-transmissive material. Thus, the output of the lamp 34 comprises ultraviolet radiation 36 rather than visible light. As will become apparent from the discussion that follows, the output of the lamp 34 is chosen for its ability to excite the phosphor matrix 20 to emit visible light. In general, the dominant emission spectrum of lamp 34 is between 254 nm and 365 nm. This spectrum is, of course, selected so as to match the excitation spectrum of the phosphors. Other energy sources, including electron beams are known to excite phosphors to emit visible light and may be substituted for the fluorescent lamp 34.

The display utilizes the intrinsically high energy conversion efficiency (visible light emitted per unit of energy applied) of fluorescent illumination. Whereas an incandescent lamp exhibits an overall efficiency of approximately 15 lumens per watt, the efficiency of fluorescent illumination exceed 50 lumens per watt. Unlike prior art systems that have sometimes utilized fluorescent lamps as a source of visible white light that is thereafter colored by means of lossy filters, the present invention obtains the maximum available energy efficiency offered by the utilization of fluorescent energy.

The ultraviolet radiation 36 from the lamp 34 is transmitted through the first dichroic filter 14 prior to reaching the phosphor matrix 20. As the radiation 36 reaches the phosphors of the matrix 20, the ultraviolet radiation is, in turn, converted to colored visible light at a relatively high efficiency (in excess of eighty percent). This is to be contrasted to the prior art wherein the generation of colored light is quite inefficient due to the high absorption of the visible white light by a narrowband dye filter. In such a prior art system, about thirty percent of the incident energy is transmitted. The actual amount of transmission achieved is dependent upon the bandwidth of the filter. Well saturated, or narrow bandwidth, colors can only be realized at the expense of increased selectivity and consequent additional energy loss.

The ultraviolet radiation 36 that is not initially absorbed by the phosphors 20 is reflected from the second filter 19 and may thereafter be absorbed by the phosphors, further increasing the efficiency of the system.

The visible colored light 40 emitted by the phosphors is radiated toward both the front and the back of the light valve 10. Due to the visible light reflectivity of the dichroic filter 14, the phosphor emissions that travel toward the backside of the light valve 10 are reflected therefrom and toward the front of the display. The close spacing between the phosphor matrix 20 and the adjacent dichroic filter 14 allows only minimal "spreading" of the reflected phosphor outputs. Thus, a high percentage of this reflected light is available for illumination of the display after travelling through the light "pipes" of the fiber optic plate 18 and the transmissive portions of the liquid crystal layer 24.

The dichroic filter 14 additionally reflects the incoming ambient light. The portion of ambient light reaching the filter 14 represents the residue of the incoming light that is incident upon the diffusing surfaces of the phosphors 20. As mentioned earlier, the effect of that light insofar as reducing the purity of the backlit image produced by the display is corrected by either the coloring of the phosphor bodies to match their emission spectra or the addition of the optional dilute color filter matrix 30 at the front of the light valve 10.

The ambient light 42 enters the valve 10 through the front plate 28, polarizer 32 (in the event that a Heilmeier liquid crystal material is utilized) and (optionally), the dilute filter 30 (these elements of the light valve are not shown in Figure 2). After passing through the transparent counterelectrode 26 and the light-modulating layer of liquid crystal material 24, it reaches the fiber optic plate 18. As mentioned earlier, the active electrode matrix 22 comprising a conventional array of busses and transparent drive electrodes 23, in registration with the phosphor matrix at the back of the plate 18, is located on the front surface of the plate 18.

As can be seen from Figure 2, the optical fibers of the plate 18 can be thought of as grouped into a plurality of "pipes" 38 for transmitting light therethrough. Each pipe 38 underlies a single phosphor 20 of the matrix and, due to the registration of the phosphor and electrode matrices, transfers light toward the associated transparent electrode 23 on the opposed face of the fiber optic plate 18. Each of the phosphors of the matrix 20 corresponds to a singe pixel of the display, each pixel being about .010 inches square (0.25cm). Between 50 and 100 optical fibers of the plate 18 comprise an individual light pipe 36 for transferring the full color illumination of the phosphor matrix 20 to the front surface of the plate 18, adjacent the layer of liquid crystal material 24. The individual phosphor dimensions match those of the electrode matrix and a typical display panel will include approximately 250,000 to 1,000,000 phosphor elements or pixels. Visible light that is incident at either surface of the plate 18 will be transmitted through a pipe 38 comprising a plurality of adjacent optical fibers. The image is dissected by the individual optical fibers of the plate 18 and the total image is transferred through the individual optical fibers without significant dispersion. Thus, the plate acts as a relay lens, transferring the image plane of the phosphors to close proximity to the liquid crystal layer.

In the event that the phosphors of the matrix 20 are not colored and the optional filter matrix 30 is utilized, the above described process whereby off-axis incident illumination is screened by the fiber optic plate 18 similarly prevents cross-contamination of the colors of the display and assures that the ambient illumination will enhance the color quality of the image. As mentioned above, the colored windows of the filter 30 are aligned with the matching color-emitting phosphors of the matrix 20. By locating the fiber optic plate 18 intermediate the filter 30 and the phosphors 20, the ambient light that is incident upon the phosphors is required to travel and exit through the particular color filter that is in registration with the phosphor of the identical light emitting color. The particular light path for a given phosphor-filter combination is, of course, shuttered (for off, on and gray-level light transmission) by the alignment of the molecules of the liquid crystal layer 24. Thus, ambient light is reflected only off the phosphors that have been shuttered on the liquid crystal layer 24.

Thus it is seen that there has been provided a new liquid crystal display of the type that is illuminated by both ambient and artificial light energy. As such, the display is operable in the transflective mode. Although reference has been made to liquid crystal light valve material, it should be understood that other known types of light valves or modulators may be used. Examples of such alternatives include suspensions of polarizing particles in a host of liquid, magneto-optical light modulators that utilize the Faraday effect and piezoelectric light modulators.

Certain embodiments of the invention can realise much higher efficiencies in the utilization of input energy. This beneficial result derives, in part, from a combination of the generally low power requirements for modulating liquid crystal material (as opposed to CRT technology) coupled with a design that features the efficient energy transformations that are inherent in the use of ultraviolet radiation to excite phosphorescent material to narrow band emissions of visible light.

## Claims

1. A display comprising in combination a light modulating member (24), means (23) for applying a plurality of spatially distributed field values to said member whereby a pattern of light transmissive areas is generated within said light modulating member, a phosphor layer (20) which can be excited to emit visible light, a fibre optic component (18) intermediate said phosphor layer (20) and light modulating member (24), said component comprising a bundle of optical fibres (38) and said phosphor layer being arranged so that the intensity of light emitted therefrom will be modulated by the pattern of light transmissive areas of said light modulating member (24), characterised in that said means (23) for applying a plurality of spatially distributed field values is arranged adjacent to and at that side of said light modulating member which is more remote from the fibre optic component (18).

2. A display as claimed in claim 1, wherein said light modulating member (24) is in the form of a layer of liquid crystal material.

3. A display as claimed in claim 1 or 2, wherein said means (23) for applying spatially distributed field values is provided by an array (22) of transparent control electrodes (23).

4. A display as claimed in claim 3, wherein said array (22) is planar and is arranged to form a planar array of adjacent modulated light conducting cells.

5. A display as claimed in any one of claims 3 or 4, wherein said array of transparent control electrodes (23) is formed upon an absorptive bus mask (50).

6. A display as claimed in any one of the preceding claims, wherein said phosphor layer (20) comprises a planar matrix of distinct phosphor elements, each of said elements being in light conducting communication with an end of a light pipe (38) formed from a plurality of adjacent, parallel optical fibres of the fibre optic component (18).

7. A display as claimed in claim 6, wherein adjacent ones of said phosphor elements are distributed into adjacent groups of said elements, and wherein the emission spectra of the elements of each said group differ from each other such that the color of visible light emitted from each said group can be adjusted through the full spectrum of visible light.

8. A display as claimed in claim 7, wherein each said phosphor element is colored such that the color of visible light reflected by it closely matches that of its emitted spectrum.

9. A display as defined in any one of claims 6 to 8 and including a dilute color filter (30) comprising a planar matrix of light-absorbing, wide-passband dye elements, each of said dye elements being in alignment with a like color emitting one of said phosphor elements (20) through one of said light pipes (38).

10. A display as defined in claim 9, wherein said dilute color filter (30) is located between said fibre optic component (18) and said light modulating member (24).

11. A display as claimed in claim 9 or 10, and including a transparent reference electrode (22) deposited on a front face of said color filter (30) and adjacent said light modulating material (24).

12. A display as claimed in any one of the preceding claims and including an ultraviolet light source (34) behind said phosphor layer (20) for irradiating said layer (20) with ultraviolet light.

13. A display as claimed in any one of the preceding claims and including first filter means (14) arranged on the side of said phosphor layer (20) more remote from said light modulating member for transmitting ultraviolet light to said phosphor layer (20) and for reflecting ambient light incident thereupon.

14. A display as claimed in any one of the preceding claims and including a filter layer (19) between said phosphor layer (20) and said fibre optic component (18) for transmitting visible ambient light to said layer (20) and for reflecting ultraviolet light incident thereupon.

15. A display as claimed in claim 14 when appended to claim 6 or any one of claims 7 to 13 when appended to claim 6, wherein said phosphor elements (20) are deposited directly on said filter layer (19).

16. A display as claimed in any one of the preceding claims and including a transparent counterelectrode layer (26) located adjacent and at that side of said light modulating member (24) more remote from the means for applying spatially distributed field values.

17. A display as claimed in claim 16, wherein said transparent counterelectrode layer (26) is located between said fibre optic component (18) and said light modulating member (24).

18. A display as claimed in any one of the preceding claims, wherein said fibre optic component (18) comprises two independent fibre optic plates assembled back-to-back.

19. A display as claimed in claim 2 or any one of claims 3 to 18 when appended to claim 2, wherein said liquid crystal material is a guest-host (Heilmeier-type) material and further comprises a polarizing layer at the side of said liquid crystal layer (24) more remote from said fibre optic component (18).

## Patentansprüche

1. Anzeigevorrichtung, die in Kombination ein Lichtmodulationselement (24), eine Einrichtung (23) zum Leiten einer Vielzahl räumlich verteilter Feldwerte zu dem Element umfaßt, wodurch eine Struktur lichtdurchlässiger Bereiche innerhalb des Lichtmodulationselmentes erzeugt wird, eine Leuchtmittelschicht (20), die erregt werden kann, so daß sie sichtbares Licht emittiert, ein Lichtleitbauteil (18) zwischen der Leuchtmittelschicht (20) und dem Lichtmodulationselement (24), wobei das Bauteil ein Bündel Lichtleitfasern (38) umfaßt, und die Leuchtmittelschicht so angeordnet ist, daß die Intensität des von selbiger emittierten Lichtes durch die Struktur lichtdurchlässiger Bereiche des Lichtmodulationselementes (24) moduliert wird, **dadurch gekennzeichnet**, daß die Einrichtung (23) zum Leiten einer Vielzahl räumlich verteilter Feldwerte an das Lichtmodulationselement angrenzend und auf der Seite desselben angeordnet ist, die weiter von dem Lichtleitbauteil (18) entfernt ist.

2. Anzeigevorrichtung nach Anspruch 1, wobei das Lichtmodulationselement (24) die Form einer Schicht aus Flüssigkristallmaterial hat.

3. Anzeigevorrichtung nach Anspruch 1 oder 2, wobei die Einrichtung (23) zum Leiten räumlich verteilter Feldwerte durch eine Anordnung (22) transparenter Steuerelektroden (23) gebildet wird.

4. Anzeigevorrichtung nach Anspruch 3, wobei die Anordnung (22) planar ist und eine planare Anordnung aneinandergrenzender, moduliertes Licht leitender Zellen bildet.

5. Anzeigevorrichtung nach einem der Ansprüche 3 oder 4, wobei die Anordnung transparenter Steuerelektroden (23) auf einer absorbierenden Busmaske (50) ausgebildet ist.

6. Anzeigevorrichtung nach einem der vorangehenden Ansprüche, wobei die Leuchtmittelschicht (20) eine planare Matrix einzelner Leuchtmittelelemente faßt, wobei jedes der Elemente in lichtleitender Verbindung mit einem Ende eines Lichtleiters (38) steht, der aus einer Vielzahl aneinandergrenzender, paralleler Lichtleitfasern des Lichtleitbauteils (18) besteht.

7. Anzeigevorrichtung nach Anspruch 6, wobei aneinandergrenzende Leuchtmittelelemente in aneinandergrenzende Gruppen der Elemente verteilt sind, und wobei die Emissionsspektren der Elemente jeder Gruppe sich so voneinander unterscheiden, daß die Farbe des sichtbaren Lichtes, das von jeder der Gruppen emittiert wird, über das gesamte Spektrum sichtbaren Lichtes eingestellt werden kann.

8. Anzeigevorrichtung nach Anspruch 7, wobei jedes der Leuchtmittelelemente so gefärbt ist, daß die Farbe des von ihm reflektierten, sichtbaren Lichtes eng an die seines emittierten Spektrums angepaßt ist.

9. Anzeigevorrichtung nach einem der Ansprüche 6 bis 8, die ein schwaches Farbfilter (30) enthält, das eine planare Matrix lichtabsorbierender Farbelemente mit breitem Durchlässigkeitsbereich umfaßt, wobei jedes der Farbelemente über einen der Lichtleiter (38) auf eines der Leuchtmittelelemente (20) ausgerichtet ist, das die gleiche Farbe emittiert.

10. Anzeigevorrichtung nach Anspruch 9, wobei sich das schwache Farbfilter (30) zwischen dem Lichtleitbauteil (18) und dem Lichtmodulationselement (24) befindet.

11. Anzeigevorrichtung nach Anpruch 9 oder 10, die eine transparente Bezugselektrode (22) enthält, die an einer Vorderfläche des Farbfilters (30) und an das lichtmodulierende Material (24) angrenzend angeordnet ist.

12. Anzeigevorrichtung nach einem der vorangehenden Ansprüche, die eine ultraviolette Lichtquelle (34) hinter der Leuchtmittelschicht (20) enthält, die die Schicht (20) mit ultraviolettem Licht bestrahlt.

13. Anzeigevorrichtung nach einem der vorangehenden Ansprüche, die eine erste Filtereinrichtung (14) enthält, die an der Seite der Leuchtmittelschicht (20) angeordnet ist, die weiter von dem Lichtmodulationselement entfernt ist, und die ultraviolettes Licht zur Leuchtmittelschicht (20) durchläßt und darauf auftreffendes Umgebungslicht reflektiert.

14. Anzeigevorrichtung nach einem der vorangehenden Ansprüche, die eine Filterschicht (19) zwischen der Leuchtmittelschicht (20) und dem Lichtleitbauteil (18) enthält, die sichtbares Umgebungslicht zu der Schicht (20) durchläßt und darauf auftreffendes ultraviolettes Licht reflektiert.

15. Anzeigevorrichtung nach Anspruch 14, wenn an Anspruch 6 angefügt, oder nach einem der Ansprüche 7 bis 13, wenn an Anspruch 6 angefügt, wobei die Leuchtmittelelemente (20) direkt auf der Filterschicht (19) aufgetragen sind.

16. Anzeigevorrichtung nach einem der vorangehenden Ansprüche, die eine transparente Gegenelektrodenschicht (26) enthält, die an das Lichtmodulationselement (24) angrenzend und an der Seite desselben angeordnet ist, die weiter von der Einrichtung zum Leiten von räumlich verteilten Feldwerten entfernt ist.

17. Anzeigevorrichtung nach Anspruch 16, wobei sich die transparente Gegenelektrodenschicht (26) zwischen dem Lichtleitbauteil (18) und dem Lichtmodulationselement (24) befindet.

18. Anzeigevorrichtung nach einem der vorangehenden Ansprüche, wobei das Lichtleitbauteil (18) zwei unabhängige Lichtleitplatten umfaßt, die mit ihren Rückseiten zueinander zusammengesetzt sind.

19. Anzeigevorrichtung nach Anspruch 2 oder einem der Ansprüche 3 bis 18, wenn an Anspruch 2 angefügt, wobei das Flüssigkristallmaterial ein Gast-Wirt-Material (Heilmeier-Typ) ist und des weiteren eine polarisierende Schicht an der Seite der Flüssigkristallschicht (24) umfaßt, die weiter von dem Lichtleitbauteil (18) entfernt ist.

## Revendications

1. Visuel comportant, en combinaison, un élément (24) de modulation de lumière, des moyens (23) destinés à appliquer plusieurs valeurs de champ distribuées dans l'espace audit élément afin qu'un motif de zones transmettant la lumière soit généré à l'intérieur dudit élément de modulation de la lumière, une couche (20) de substance fluorescente qui peut être excitée pour émettre une lumière visible, un composant optique (18) à fibres entre ladite couche (20) de substance luminescente et ledit élément (24) de modulation de la lumière, ledit composant comprenant un faisceau de fibres optiques (38) et ladite couche de substance luminescente étant agencée de manière que l'intensité de la lumière qu'elle émet soit modulée par le motif des zones transmettant la lumière dudit élément (24) de modulation de la lumière, caractérisé en ce que lesdits moyens (23) destinés à appliquer plusieurs valeurs de champ distribuées dans l'espace sont agencés de façon à être adjacents audit élément de modulation de la lumière et sur le côté de cet élément qui est plus éloigné du composant optique (18) à fibres.

2. Visuel selon la revendication 1, dans lequel ledit élément (24) de modulation de lumière se présente sous la forme d'une couche de matière à cristaux liquides.

3. Visuel selon la revendication 1 ou 2, dans lequel lesdits moyens (23) destinés à appliquer des valeurs de champ distribuées dans l'espace sont formés par un réseau (22) d'électrodes transparentes (23) de commande.

4. Visuel selon la revendication 3, dans lequel ledit réseau (22) est plan et est agencé pour former un réseau plan de cellules adjacentes, conductrices de la lumière modulée.

5. Visuel selon l'une des revendications 3 et 4, dans lequel ledit réseau d'électrodes transparentes (23) de commande est formé sur un masque de bus absorbant (50).

6. Visuel selon l'une quelconque des revendications précédentes, dans lequel ladite couche (20) de substance luminescente comprend une matrice plane d'éléments distincts en substance luminescente, chacun desdits éléments étant en communication de conduction de la lumière avec une extrémité d'un conduit optique (38) formé de plusieurs fibres optiques parallèles et adjacentes du composant optique (18) à fibres.

7. Visuel selon la revendication 6, dans lequel certains, adjacents, desdits éléments en substance luminescente sont distribués en groupes adjacents desdits éléments, et dans lequel les spectres d'émission des éléments de chacun desdits groupes diffèrent les uns des autres de manière que la couleur d'une lumière visible émise par chacun desdits groupes puisse être ajustée dans tout le spectre de la lumière visible.

8. Visuel selon la revendication 7, dans lequel chacun desdits éléments en substance luminescente est coloré de manière que la couleur de la lumière visible qu'il réfléchit corresponde étroitement à celle de son spectre d'émission.

9. Visuel selon l'une quelconque des revendications 6 à 8 et comprenant un filtre (30) à couleur diluée comportant une matrice plane d'éléments colorants absorbant la lumière, à large bande passante, chacun desdits éléments colorants étant en alignement, par l'intermédiaire de l'un desdits conduits (38) de lumière, avec l'un desdits éléments (20) en substance luminescente émettant une couleur identique.

10. Visuel selon la revendication 9, dans lequel ledit filtre (30) à couleur diluée est situé entre ledit composant optique (18) à fibres et ledit élément (24) de modulation de la lumière.

11. Visuel selon la revendication 9 ou 10 et comprenant une électrode transparente (22) de référence déposée sur une surface frontale dudit filtre (30) à couleur et adjacente à ladite matière (24) de modulation de la lumière.

12. Visuel selon l'une quelconque des revendications précédentes et comprenant une source (34) de lumière ultraviolette en arrière de ladite couche (20) en substance luminescente pour irradier ladite couche (20) de lumière ultraviolette.

13. Visuel selon l'une quelconque des revendications précédentes et comprenant un premier moyen à filtre (14) disposé sur le côté de ladite couche (20) en substance luminescente plus éloigné dudit élément de modulation de la lumière pour transmettre de la lumière ultraviolette à ladite couche (20) en substance luminescente et pour réfléchir la lumière ambiante qui lui est incidente.

14. Visuel selon l'une quelconque des revendications précédentes et comprenant une couche (19) de filtre entre ladite couche (20) de substance luminescente et ledit composant optique (18) à fibres pour transmettre de la lumière ambiante visible à ladite couche (20) et pour réfléchir la lumière ultraviolette qui lui est incidente.

15. Visuel selon la revendication 14 en dépendance de la revendication 6 ou l'une quelconque des revendications 7 à 13 en dépendance de la revendication 6, dans lequel lesdits éléments (20) en substance luminescente sont déposés directement sur ladite couche (19) de filtre.

16. Visuel selon l'une quelconque des revendications précédentes et comprenant une couche transparente (26) de contre-électrode placée de façon à être adjacente audit élément (24) de modulation de la lumière et sur le côté de cet élément plus éloigné des moyens destinés à appliquer des valeurs de champ distribuées dans l'espace.

17. Visuel selon la revendication 16, dans lequel ladite couche transparente (26) de contre-électrode est placée entre ledit composant optique (18) à fibres et ledit élément (20) de modulation de la lumière.

18. Visuel selon l'une quelconque des revendications précédentes, dans lequel ledit composant optique (18) à fibres comporte deux plaques optiques indépendantes à fibres assemblées dos à dos.

19. Visuel selon la revendication 2 ou l'une quelconque des revendications 3 à 18 en dépendance de la revendication 2, dans lequel ladite matière à cristaux liquides est une matière du type incluant-inclus (du type Heilmeier) et comprend en outre une couche polarisante du côté de ladite couche (24) de cristaux liquides plus éloignée dudit composant optique (18) à fibres.
